# FASCICULE DE BREVET EUROPEEN

(11) **EP 1 395 118 B1**
(45) Date de publication et mention de la délivrance du brevet: **07.06.2006**
(21) Numéro de dépôt: 02764918.5
(22) Date de dépôt: 14.06.2002
(51) Int. Cl.: A01N 65/00

(54) **ELICITEUR PROVENANT D'EXTRAITS DE GRAINES DE TRIGONELLA FOENUM GRAECUM ET SON UTILISATION DANS UN PROCEDE DE LUTTE CONTRE LES AGENTS PATHOGENES DE PLANTES**
AUS TRIGONELLA-FOENUM-GRAECUM-SAMENEXTRAKTEN HERGESTELLTER ELICITOR UND SEINE VERWENDUNG BEI DER BEKÄMPFUNG VON PFLANZENPATHOGENEN ORGANISMEN
ELICITOR MADE FROM TRIGONELLA FOENUM GRAECUM SEED EXTRACTS AND USE THEREOF IN CONTROLLING PATHOGENIC ORGANISMS OF PLANTS

(30) Priorité: 15.06.2001 FR 0107898
(43) Date de publication de la demande: 10.03.2004
(73) Titulaire: S.O.F.T Sarl, 11210 Port La Nouvelle (FR); BHEST SARL, 11210 Port La Nouvelle (FR); Université Montpellier II, 34095 Montpellier Cedex 05 (FR)
(72) Inventeur: MARTINEZ, Christelle, 227, rue André Citro¬n, F-11210 Port La Nouvelle (FR); BACCOU, Jean, Claude, F-34095 Montpellier Cedex (FR); DELPECH, Lucien, 227, rue André Citro¬n, F-11210 Port la Nouvelle (FR); DELRIEUX, Michel, 227, rue André Citro¬n, F-11210 Port la Nouvelle (FR); CASSAN, Henri, 11100 Narbonne (FR)
(74) Mandataire: Ravina, Bernard
(86) Numéro de dépôt international: PCT/FR2002/002056
(87) Numéro de publication internationale: WO 2002/102162

(56) Documents cités:
- EP-A- 0 493 670
- DE-A- 19 719 266
- US-A- 5 997 877
- DATABASE CROPU [en ligne] ASHRAFUZZAMAN H: "Control of Rhizoctonia solani, Xanthomonas campestris pv. oryzae and Erwinia carotovora with plant extracts." retrieved from STN Database accession no. 1994-84121 XP002194376 & INT.CONGRESS PLANT PATHOL. (6 MEET., 70, 1993), Univ.Bangladesh-Agr.
- CHEMICAL ABSTRACTS, vol. 119, no. 11, 13 septembre 1993 (1993-09-13) Columbus, Ohio, US; abstract no. 113595, KRASKA, T. ET AL: "Resistance induction in plants by trigonelline and possible mechanisms" XP002194374 & PROC. INT. CONF. ROLE FORMALDEHYDE BIOL. SYST., 3RD (1992), 163-8. EDITOR(S): TYIHAK, ERNO. PUBLISHER: HUNG. BIOCHEM. SOC., BUDAPEST, HUNG.,
- CHEMICAL ABSTRACTS, vol. 127, no. 14, 6 octobre 1997 (1997-10-06) Columbus, Ohio, US; abstract no. 188343, SEIDEL, PETRA ET AL: "Tolerance responses after application of resistance inducers" XP002194375 & NACHRICHTENBL. DTSCH. PFLANZENSCHUTZDIENSTES (BRAUNSCHWEIG) (1997), 49(2), 24-33,
- DATABASE CABA [en ligne] OMOLOSO, A. D. ET AL: "Broad spectrum antibacterial activity of Allium cepa, Allium roseum, Trigonella foenum graecum and Curcuma domestica" retrieved from STN Database accession no. 40555 XP002194377 & NATURAL PRODUCT SCIENCES, (2001) VOL. 7, NO. 1, PP. 13-16. 13 REF. ISSN: 1226-3907, Department of Applied Sciences, Papua New Guinea University of Technology, P.M.B. Lae, Papua New Guinea.
- "THE MERCK INDEX" 1991 , MERCK & CO , WHITEHOUSE, NJ XP002194373 * page 4034, 4036. Fenugreek * * page 9770, 9765. Trigonelline *

## Description

### Domaine de l'invention

La présente invention concerne un procédé de lutte contre des agents pathogènes et toutes sortes de parasites de plantes (champignon, bactéries, virus, insectes...etc...) à l'aide d'un nouveau stimulateur des défenses naturelles des plantes ou éliciteur et composition pour la mise en oeuvre de ce procédé. La nouvelle composition est active à titre préventif et curatif et comprend un extrait de graines de fenugrec ou Trigonella foenum graecum.

### Technique antérieure

Les plantes subissent en permanence une pression parasitaire de la part de nombreux agents pathogènes comme des virus, des bactéries, des champignons ou des insectes. La résistance de la plante à un agent pathogène résulte soit de la reconnaissance de l'agent pathogène par la plante (relation gène pour gène), soit de la stimulation des défenses sous l'effet de blessures causées par le parasite.

Dans le premier cas, la résistance résulte de ia reconnaissance de l'agent pathogène porteur d'un gène particulier appelé "gène d'avirulence" par la plante dotée d'un "gène de résistance" correspondant. Dans ce cas, il existe une véritable relation interactive génétiquement programmée entre plante et parasite. Après reconnaissance des deux protagonistes, des mécanismes spécifiques sont alors développés par la plante (cascade d'événements métaboliques, synthèse de signaux messagers de la résistance), lui conférant le caractère de résistance tandis que l'invasion des tissus hôtes par l'agent pathogène reste très localisée.

Dans le second cas, les mécanismes de défense sont induits, lors d'attaques fongiques par exemple, par les oligosaccharides émanant d'une part de la dégradation des parois du champignon sous l'action des hydrolases de l'hôte, et d'autres part des parois des cellules hydrolysées par les enzymes du champignon. Ces débris de parois servent également de messagers de la résistance.

Suite à un premier déclenchement des mécanismes de résistance, les végétaux peuvent développer une résistance accrue face à de nouvelles attaques de parasites, notamment dans les parties non infectées de la plante, et ceci à nouveau grâce à certains «messagers chimiques naturels». Ce mécanisme est appelé «Résistance Systémique Acquise».

Lorsqu'une plante est sensible à un agent pathogène, celle-ci est incapable de reconnaître son agresseur, soit par la relation gène pour gène, soit par l'effet «blessure». Celle-ci est alors incapable d'activer de façon efficace ses gènes de défense. Il est alors possible de stimuler les défenses naturelles des plantes en leur fournissant de façon exogène ces «signaux chimiques naturels» de la résistance qu'elles sont incapables de produire dans certains cas vis à vis de certains agents pathogènes.

Lorsqu'il y a reconnaissance entre la plante et l'agent pathogène, des mécanismes particuliers sont développés par la plante. Souvent la plante répond par une apparition de nécrose cellulaire sur le site de l'attaque par l'agent pathogène et bloque ainsi sa progression. Cette réaction de défense est presque toujours associée à la mise en oeuvre de mécanisme tels que la biosynthèse de phytalexines (molécules antifongiques), d'enzymes de défense comme les peroxydases ou des protéines en liaison avec la pathogenèse (protéines PR) comme les chitinases ou les β-1,4-endoglucanases. Ces enzymes sont capables de lyser les parois fongiques et bactériennes. Lorsqu'il y a résistance, les plantes sont capables de renforcer les parois cellulaires (synthèse de lignine) pour bloquer l'agent pathogène sur son site de pénétration.

On connaît un procédé pour la stimulation des défenses naturelles de plantes agronomiquement utiles qui comprend l'application auxdites plantes d'un agent éliciteur ou sensibilisateur qui est capable au contact des plantes de provoquer préventivement dans celles-ci l'activation des gènes de défense sur le site d'application du produit ainsi qu'une résistance systémique acquise. Un tel procédé est plus particulièrement décrit dans la demande de brevet français déposée le 18 juillet 1997 sous le No. 2 766 059 déposée par les Laboratoires GOEMAR. Ce procédé utilise une quantité efficace d'un oligo β 1-3-glucane. Celui-ci est préparé à partir de β 1-3-glucanes d'origine diverses qui sont hydrolysés en oligo β 1-3-glucanes. Les β 1-3-glucanes proviennent de bactéries, notamment *d'Alcaligenes faecalis,* de champignons, notamment de *Schizophyllum* et de *Sclerotium glucanium,* de levures, notamment de *Saccharomyces cerevisae,* d'algues et de céréales.

Cependant, ce procédé ne permet pas de provoquer une résistance plusieurs fois de suite du même plant. Une seule pulvérisation est possible. Ce procédé est donc essentiellement préventif et limité dans le le temps.

On a décrit dans le brevet des Etats-Unis d'Amérique délivré le 2 novembre 1999 à EDEN Bioscience sous le No. 5 977 060, un procédé de lutte contre les insectes sur des plantes. Dans ce brevet, on cite de nombreuses références concernant les éliciteurs pour des systèmes défensifs des plantes contre les insectes auxquelles on peut se reporter. Ce procédé est un procédé de lutte contre les insectes pour les plantes qui consiste à appliquer un éliciteur polypeptide ou protéine à une plante ou une graine dans des conditions efficaces pour lutter contre les insectes. L'éliciteur (polypeptide, ou protéine) causant la réponse hypersensible, correspond à celui obtenu à partir d'un agent pathogène choisis dans le groupe constitué par Erwinia, Pseudomonas, Xanthomonas, Phytophthora et leurs mélanges. Dans un mode de réalisation l'éliciteur peut être appliqué aux plantes en appliquant une bactérie contenant des gènes capables de sécréter ou d'exporter le polypeptide ou la protéine. La bactérie ne provoque pas la maladie et a été transformée (par exemple de manière recombinante) par des gènes encodant un polypeptide ou une protéine éliciteur de réponse hypersensible. Ce document décrit donc un procédé de lutte contre les insectes et non contre les agents pathogènes dans leur ensemble. Par ailleurs, ce document fait référence à des manipulations génétiques qui sont très mal perçues par le public.

On connaît par ailleurs des graines de fenugrec qui sont utilisées dans l'industrie agroalimentaire comme épice et dans l'industrie pharmaceutique. Le fenugrec ou Trigonella,foenum graecum ou encore Sénégré est une légumlneuse de la famille des papilionacées. Le fenugrec contient une huile essentielle constituée de 40 composés différents dont la 3-hydroxy-4,5-diméthyl-oxolane-2-one semble être le composant aromatique le plus important. Parmi les composants non volatils qu'il contient, on a identifié des furostanol glycosides et des stérol et des saponines stéroïdiques (ayant un Intérêt potentiel pour l'Industrie pharmaceutique).

On a décrit dans le brevet des Etats-Unis d'Amérique délivré le 7 décembre 1999 à la société Emerald Seed Products Ltd. sous le No. 5 997 877, un procédé d'extraction de fractions valables commercialement de graines de fenugrec. Les graines de fenugrec contiennent un noyau central jaune, qui est le cotylédon et le germe entouré de l'endosperme blanc et semi-transparent et du tégument. Cet endosperme contient des gommes de galactomannane et est entouré d'une écorce brun foncé. Le procédé de récupération des gommes ou oléorésines consiste à humidifier les graines de fenugrec dans une plage de 14% à 20% d'humidité; à broyer les graines de fenugrec; à mélanger les graines broyées avec un solvant pendant une période de contact à une certaine température de manière que certains composants des graines soient absorbés par le solvant : à séparer l'extrait du solvant. Ce procédé a pour inconvénient d'utiliser un solvant qui est un alcool polaire. Un autre procédé est décrit dans ce brevet U.S. No. 5 997 877 qui consiste à récupérer les fibres solubles. A cet effet, on broie les graines, on les tamise et on récupère la partie lourde constituée du tégument et du mucilage (enveloppe). Cette partie lourde est ensuite traitée par de l'eau chaude ce qui permet de récupérer les fibres solubles. Les gommes se trouvant dans la partie légère sont ensuite récupérées à l'aide d'un solvant.
Des éléments de l'état de la technique connue tels que les brevets DE 197 266, EP 0 493 670 ou les références DATABASE n° 1994-84121, XP 002194376 ou Chemical Abstract, volume 119, n° 11 (1993-9-13), KRASTA, font tous référence à l'utilisation de la trigonéline seule, la molécule ayant été isolée et purifiée avec des produits solvants susceptibles d'être toxiques.

Chemical abstract vol. 119 - 113595 (KRASKA) divulgue l'utilisation de la trigonelline comme éliciteur et comme inducteur de tolérance à l'encontre des champignons.

Chemical abstract vol. 127 - 188343 (SIEDEL) énonce la trigorielline parmi d'autres produits éliciteurs.

Aucun de ces deux documents ne va au-delà d'un simple énoncé de principe et aucun ne divulgue un mode de préparation d'un éliciteur à base d'extraits de trigonelline.

Le brevet EP A 0.493.670 décrit un procédé de préparation qui comme ceux énoncés précédemment fait appel à des solvants (éthanol et éther) dont l'invention vise à éviter les effets néfastes sur les plantes.

### Résumé de l'invention

La présente invention a pour objet de lutter contre des agents pathogènes et toutes sortes de parasites de plantes (champignons, virus, bactéries, insectes...etc...) à l'aide d'un nouveau produit éliciteur, ce dernier permettant une action préventive et également curative.

La présente invention concerne en outre un nouvel éliciteur qui peut comporter plusieurs molécules éliciteur.

Encore un autre objet de la présente invention est de fournir un procédé de préparation d'un nouvel éliciteur, ce procédé étant non agressif vis-à-vis de l'environnement.

Les inventeurs de la présente demande ont découvert après des essais en laboratoire, que des extraits issus de fenugrec avaient la propriété de stimuler fortement différentes activités enzymatiques impliquées dans les mécanismes de défense des végétaux contre les agents pathogènes et toutes sortes de parasites de plantes (champignon, bactéries, virus, insectes...et...).

La présente invention concerne donc un procédé utilisant comme éliciteur plusieurs molécules provenant d'extraits de graine de Trigonella foenum graecum, ces molécules n'ayant subi aucun processus de purification et d'isolation et aucun traitement par des solvants, ce qui peut induire des effets toxiques pour les plantes à traiter.

A cet effet, le procédé selon l'invention de lutte contre les agents pathogènes de plantes agronomiquement utiles avec utilisation d'un produit éliciteur à base d'extraits de graines de Trigonella foenum oraecum, se caractérise essentiellement en ce que le produit éliciteur comprend deux molécules éliciteur provenant d'extraits de graines de Trigonella foenum graecum dont une de taille supérieure à 30.000 Dalton et l'autre de taille inférieure à 30.000 Dalton.

Le procédé selon l'invention est en outre caractérisé en ce que l'application est effectuée aux stades végétatifs précoces et/ou aux stades végétatifs adultes.

Une autre caractéristique du procédé selon l'invention est que l'application est réalisée aussi souvent que nécessaire avec par exemple une fréquence d'application de 10 jours ou 15 jours comme c'est réalisé couramment en agriculture. Les plantes supportent la répétition des traitements par l'éliciteur et les mécanismes de défense de la plante sont stimulés à chaque traitement.

L'extrait de graines de Trigonella foenum graecum est obtenu par un procédé consistant à broyer les graines, à séparer la fraction cotylédon et germe, de la fraction tégument et mucilage, à mélanger la fraction cotylédon et germe avec de l'eau, et à effectuer l'extraction des composants de l'éliciteur actif avec de l'eau à une température modérée, sous agitation.

L'extraction est effectuée de préférence dans une composition contenant 10% en poids de fraction cotylédon et germe et 90% en poids d'eau. La température d'extraction est de préférence dans la plage de la température ambiante (environ 25°C) à environ 100°C.

Les essais effectués ont démontré que le produit éliciteur devait comporter au moins deux molécules éliciteur de taille différente. II a été constaté qu'une seule molécule de taille supérieure à 30.000 Dalton ou de taille Inférieure à 30.000 Dalton avait des effets très réduits et que l'association des deux molécules dont une supérieure à 30.000 Dalton et une inférieure à cette dimension donnait des résultats très intéressants.

La présente invention sera maintenant décrite plus en détail à l'aide des exemples suivants, qui ne sont en aucun cas destinés à limiter le cadre de la présente invention.

### Exemples

### Exemple 1 - Procédé d'extraction du nouvel éliciteur

On utilise des graines de fenugrec qui sont broyées de façon à obtenir une poudre. On sépare la fraction de cotylédon et de germe de la fraction tégument et mucilage par un procédé de densitométrie. On mélange 100 grammes de la fraction cotylédon et germe avec 1000 mi d'eau, et on effectue l'extraction à une température comprise entre la température ambiante et 100°C, en agitant lentement. On filtre ensuite le produit avec un filtre ayant des pores ayant une dimension entre de préférence 2 µm et 500 µm.

Après ces phases de séparation mécanique de la fraction cotylédon et germe et de traitement aqueux avec filtration, II est apparu intéressant d'introduire une phase de déshydratation par tout procédé et moyens connus (atomisation, lyophilisation, ou évaporation par exemple) qui aura pour effet d'éviter que le produit initialement humide ne se dégrade ou d'éviter le recours à des produits stabilisateurs ou conservateurs.

### Exemple 2 - Traitement de plantes maraîchères et ornementales par l'extrait de fenugrec

On pulvérise l'extrait préparé dans l'exemple 1 ci-dessus sur les plantes suivantes, et on teste la résistance de différentes plantes à différents parasites. A titre d'exemple, on a obtenu des effets très significatifs lors de traitements préventifs et curatifs sur : melon 1 oïdium ; melon 1 bactériose ; melon / Thrips ; melon / aleurodes ; vigne / oïdium : vigne / mildlou...etc...

On compare ces plantes traitées avec des plantes non traitées. Dans le cas de traitement préventifs, les plants traités sont peu ou pas attaqués par les parasites (contrairement aux plants non traités), à condition de renouveler le traitement régulièrement. Dans le cas de traitement curatifs, les plantes traitées voient les symptômes des infections diminuer au bout de quelques jours dès le premier traitement avec l'extrait de fenugrec. Le traitement peut avoir lieu sur jeunes plantes, sur boutures, ou sur plantes adultes, en fait quelque soit le stade végétatif des plantes.

II a été également constaté un effet anti-insecte du traitement selon l'invention.

## Revendications

1. Procédé de lutte contre les agents pathogènes des plantes agronomiquement utiles avec utilisation d'un produit éliciteur **caractérisé en ce que** le produit éliciteur comprend deux molécules éliciteur provenant d'extraits de germes et de cotylédons des graines de Trigonella foenum graecum dont une supérieure à 30.000 Dalton et l'autre inférieure à 30.000 Dalton.

2. Procédé selon les revendications 1 et 2, **caractérisé en ce que** l'application est effectuée aux stades végétatifs précoces et/ou aux stades végétatifs adultes.

3. Nouvel éliciteur pour la mise en oeuvre du procédé selon les revendications 1 et 2 **caractérisé en ce qu'**il comprend au moins une molécule éliciteur provenant d'extraits de germes et de cotylédons des graines de Trigonella foenum graecum dont une supérieure à 30.000 Dalton et l'autre inférieure à 30.000 Dalton.

4. Procédé de préparation du nouvel éliciteur selon la revendication 3. consistant à broyer les graines, à séparer la fraction cotylédon et germe, de la fraction tégument et mucilage, à mélanger la fraction cotylédon et germe avec de l'eau, et à effectuer l'extraction des composants de l'éliciteur actif avec de l'eau à une température modérée, sous agitation.

5. Procédé selon la revendication 4, **caractérisé en ce que** l'extraction est effectuée de préférence dans une composition contenant 10% en poids de fraction cotylédon et endosperme et 90% en poids d'eau. La température d'extraction est de préférence dans la plage de la température ambiante (environ 25°C) à environ 100°C.

6. Procédé selon les revendications 4 et 5 **caractérisé en ce que** après la phase de séparation de la fraction cotylédon et germe, son traitement aqueux et l'extraction, le produit éliciteur est déshydraté.

## Claims

1. Process to counter pathogens in agronomically useful plants with utilisation of an elicitor product **characterised in that** the said elicitor product includes two elicitor molecules derived from extracts of germs and cotyledons of Trigonella foenum graecum seeds including one greater than 30,000 Daltons and the other less than 30,000 Daltons.

2. Process in accordance with claims 1 and 2, **characterised in that** application is performed at the early vegetative stages and/or adult vegetative stages.

3. New elicitor for implementation of the process in accordance with claims 1 and 2 **characterised in that** it includes at least one elicitor molecule taken from extracts of germs and cotyledons of Trigonella foenum graecum seeds including one greater than 30,000 Daltons and the other less than 30,000 Daltons.

4. Process for preparation of the new elicitor in accordance with claim 3, involving crushing the seeds, separating the cotyledon and germ fraction from the tegument and mucilage fraction, mixing the cotyledon and germ with the water fraction, and conducting extraction of the active elicitor components with water at a moderate temperature, while shaking.

5. Process in accordance with claim 4, **characterised in that** the extraction is conducted preferably in a composition containing 10% in weight of cotyledon and endosperm fraction and 90% in weight of water. The extraction temperature is preferably in the ambient temperature range (about 25°C) to about 100°C.

6. Process in accordance with claims 4 and 5 **characterised in that** after the cotyledon and germ fraction separation phase, its aqueous treatment and extraction, the elicitor product is dehydrated.

## Patentansprüche

1. Verfahren zur Bekämpfung der Krankheitserreger der landwirtschaftlichen Nutzpflanzen mit Verwendung eines Elicitins, das **dadurch gekennzeichnet ist, dass** das Elicitin zwei Elicitin-Moleküle enthält, die aus Extrakten von Keimen und Keimblättern der Samen von Trigonella foenum graecum gewonnen werden, wobei eines eine Masse über 30 000 Dalton und das andere eine Masse unter 30 000 Dalton besitzt.

2. Verfahren gemäß den Ansprüchen 1 und 2, das **dadurch gekennzeichnet ist, dass** die Anwendung in den frühen und/oder fortgeschrittenen Vegetationsstadien erfolgt.

3. Neues Elicitin für die Durchführung des Verfahrens gemäß den Ansprüchen 1 und 2, das **dadurch gekennzeichnet ist, dass** es mindestens ein Elicitin-Molekül enthält, das aus Extrakten von Keimen und Keimblättern der Samen von Trigonella foenum greacum extrahiert wird, von denen eines eine Masse über 30 000 Dalton und das andere eine Masse unter 30 000 Dalton besitzt.

4. Verfahren zur Zubereitung des neuen Elicitins gemäß Anspruch 3, das darin besteht, die Samen zu zerkleinern, Keimblatt und Keim von Integument und Pflanzenscheim zu lösen, den Teil Keimblatt und Keim mit Wasser zu mischen und die Bestandteile des aktiven Elicitins mit temperiertem Wasser unter Schütteln zu extrahieren.

5. Verfahren gemäß Anspruch 4, das **dadurch gekennzeichnet ist, dass** die Extraktion vorzugsweise in einer Zusammensetzung durchgeführt wird, deren Gewicht zu 10 % aus Keimblatt und Endosperm und zu 90 % aus Wasser besteht. Die Extraktionstemperatur liegt vorzugsweise in einer Spanne von Umgebungstemperatur (ca. 25°C) bis ca. 100°C.

6. Verfahren gemäß den Ansprüchen 4 und 5, das **dadurch gekennzeichnet ist, dass** das Elicitin nach der Trennphase des Teils Keimblatt und Keim und nach der wässrigen Behandlung und der Extraktion dehydratisiert wird.
